# EUROPÄISCHE PATENTANMELDUNG

(11) **EP 3 543 452 A1**
(43) Veröffentlichungstag der Anmeldung: **25.09.2019**
(21) Anmeldenummer: 18162610.2
(22) Anmeldetag: 19.03.2018
(51) Int. Cl.: E06B 7/215, F16B 2/12

(54) **TÜRDICHTUNG MIT EINEM BEFESTIGUNGSELEMENT**

(71) Anmelder: Planet GDZ AG, Neustadtstrasse 2 8317 Tagelswangen (CH)
(72) Erfinder: DINTHEER, Andreas, 8308 Illnau (CH); EICHELBERGER, Daniel, 8352 Elsau (CH)
(74) Vertreter: Clerc, Natalia

(57) **Zusammenfassung**

Eine Türdichtung weist eine Gehäuseschiene (1), ein in der Gehäuseschiene (1) gehaltene Dichtleiste (2, 3) und ein Befestigungselement zur stirnseitigen oder unterseitigen Befestigung der Gehäuseschiene (1) in einer Nut eines Türflügels (6) auf. Das Befestigungselement ist als klemmendes Element (5) zur stirnseitigen Befestigung der Gehäuseschiene (1) ausgebildet. Diese Türdichtung ist zur Verwendung in Kunststofftüren und Metalltüren geeignet. Sie lässt sich zudem sehr schmal ausbilden.

## Beschreibung

### TECHNISCHES GEBIET

Die vorliegende Erfindung betrifft eine Türdichtung, eine Klammer dieser Türdichtung und einen Türflügel zur Aufnahme der Türdichtung.

### STAND DER TECHNIK

Türdichtungen zum Abdichten einer unteren Stirnfläche einer schwellenlosen Tür sind bekannt. Sie sollen Lichtdurchlass verhindern und auch einen Schallschutz bieten. Je nach Ausführungsform soll auch ein Luftdurchlass vermieden werden. Des Weiteren sind Türdichtungen für Aussentüren bekannt, welche vor Schlagregen und Wind schützen. Diese Türdichtungen lassen sich nicht nur in oder an einer unteren Stirnfläche eines Türflügels sondern auch in oder an oberen und seitlichen Stirnflächen des Türflügels anbringen.

Diese Türdichtungen können beispielsweise als Schleifdichtungen oder als absenkbare Türdichtungen ausgebildet sein. Schleifdichtungen weisen üblicherweise eine Gehäuseschiene mit einer daran oder darin befestigten Dichtlippe auf. Absenkbare Türdichtungen weisen eine Gehäuseschiene und eine darin angeordnete Dichtleiste mit einem elastomeren Dichtungsprofil auf. Die Dichtleiste wird beim Schliessen des Türflügels automatisch relativ zur Gehäuseschiene abgesenkt und beim Öffnen des Türflügels wieder automatisch angehoben. Die Auslösung erfolgt vorzugsweise rein mechanisch durch einen vorstehenden Auslöseknopf, die Rückstellung der Dichtleiste in die angehobene Grundposition wird üblicherweise mit Rückstellfedern erreicht. Derartige Absenkdichtungen sind seit Jahren bekannt und beispielsweise in EP 0 338 974, DE 19 516 530, EP 0 509 961, DE 3 526 720, DE 3 418 438 und DE 3 427 938 beschrieben.

Wird die Türdichtung in einer Nut des Türflügels befestigt, so wird üblicherweise die Gehäuseschiene mit zwei Befestigungswinkeln an den Türflügel angeschraubt. Ein Schenkel des Befestigungswinkels wird hierzu unterhalb eines oberen Stegs der Gehäuseschiene eingeschoben und der dazu rechtwinklig angeordnete Schenkel wird über dem Steg der Gehäuseschiene an die Stirnfläche des Türflügels angeschraubt.

In EP 1 486 639 B1 ist ein klammerartiges Befestigungselement offenbart, welches den oberen Steg der Gehäuseschiene umgreift und welches mittels Nagelstiften in die Deckfläche der Nut eingeschlagen wird, um die Gehäuseschiene in der Nut zu fixieren.

EP 3 095 949 A1 offenbart ein mehrfach gebogenes Befestigungselement mit zwei u-förmigen Eingriffen. Je nach gewünschter Montageposition wird der obere Steg der Gehäuseschiene in einen dieser zwei Eingriffe eingeschoben und das Befestigungselement wird mittels einer Schraube in der Nut befestigt.

EP 2 055 888 A2 beschreibt ein Befestigungsmittel in Form von zwei Blattfedern mit endseitigen Krallen. Diese Blattfedern sind an je einer äusseren Seitenfläche der Gehäuseschiene angeordnet und sie fixieren die in die Nut eingeschobene Gehäuseschiene. Diese Art der Halterung ist für Holztüren geeignet.

EP 2 949 855 A1 zeigt ebenfalls Blattfedern, welche am Gehäuse angeformt oder an diesem gehalten sind und welche nach unten zeigen. Auch diese Befestigungen sind lediglich für Holztüren geeignet. Zudem benötigen sie relativ viel Platz, so dass eine relativ breite Nut vorhanden sein muss.

### DARSTELLUNG DER ERFINDUNG

Es ist deshalb eine Aufgabe der Erfindung, eine Türdichtung mit einem Befestigungselement zu schaffen, welche insbesondere auf für Kunststofftüren und Metalltüren einsetzbar ist.

Diese Aufgabe lösen eine Türdichtung, eine Klammer und ein Türflügel mit den Merkmalen der Ansprüche 1, 11 und 15.

Die erfindungsgemässe Türdichtung mit einer Gehäuseschiene und einer in der Gehäuseschiene gehaltenen Dichtleiste weist ein Befestigungselement zur stirnseitigen Befestigung der Gehäuseschiene in einer Nut eines Türflügels auf. Das Befestigungselement ist ein klemmendes Element, welches zur stirnseitigen oder unterseitigen Befestigung der Gehäuseschiene ausgebildet ist.

Vorteilhaft ist, dass zur Montage keine weiteren Hilfsmittel und Werkzeuge notwendig sind. Das Befestigungsmittel und somit die Türdichtung lässt sich werkzeugfrei montieren. Zudem sind keine Schraubverbindungen mit dem Türflügel notwendig. Vorzugsweise lässt sich das klemmende Element auch einfach wieder entfernen, beispielsweise mit einem einfachen Hebelelement, z.B. mit dem Schaft eines Schraubenziehers oder mittels eines Kugelschreibers.

Vorteilhaft ist ferner, dass sich das klemmende Element relativ schmal ausbilden lässt. Es benötigt in Querrichtung zur Dichtung nicht mehr Platz als die Dichtung selber. Dieses Befestigungsmittel lässt sich auch bei sehr schmalen Dichtungen einsetzen, ohne dass die Nut und somit die Dicke des Türflügels vergrössert werden müssen.

Das Befestigungsmittel lässt sich kostengünstig herstellen und sie beeinträchtigt das Erscheinungsbild des Türflügels mit montierter Türdichtung kaum.

Vorzugsweise ist das klemmende Element federnd ausgebildet. Vorzugsweise greift es stirnseitig in die Gehäuseschiene ein. Alternativ kann es fest mit der Gehäuseschiene oder dem Türflügel verbunden sein.

Das klemmende Element wird nachfolgend als "Klammer" bezeichnet. Unter diesen Begriff werden jedoch nicht nur klemmende Elemente verstanden, welche selber etwas einklemmen, sondern auch Elemente, welche durch Klemmen, insbesondere durch Spreizen, in ihre Position gehalten sind.

Vorzugsweise ist die Klammer zur klemmenden Aufnahme in einem stirnseitigen Fenster des Türflügels ausgebildet oder in einem Fenster, welches auf einer Unterseite des Türflügels angeordnet ist und somit eine unterseitige Befestigung erlaubt. Dadurch lässt sich die Klammer so anordnen, dass sie der Oberfläche des Türflügels kaum vorsteht und somit das gesamte Erscheinungsbild kaum beeinflusst. Das Fenster kann unterschiedliche Formen aufweisen. Vorzugsweise ist es rechteckig. Beispielsweise ist es durch einen Schlitz gebildet. Die Anordnung an der Stirnseite weist den Vorteil auf, dass der Türflügel nicht ausgehängt werden muss, um die Türdichtung zu montieren oder zu demontieren. Die Anordnung des Fensters auf der Unterseite hat den Vorteil, dass das Fenster und, je nach Ausführungsform der Klammer, auch die Klammer selber bei montierter Dichtungsvorrichtung nicht mehr sichtbar sind.

Vorzugsweise ist die Klammer einstückig, insbesondere aus Metall oder Kunststoff, ausgebildet. Dies minimiert die Herstellungskosten und vereinfacht die Lagerung und Montage.

Vorzugsweise weist die Gehäuseschiene der Türdichtung zwei seitliche Schenkel und einen oberen Steg auf, welcher die zwei seitlichen Schenkel miteinander verbindet. Die Klammer ist vorzugsweise unterhalb dieses Stegs eingeschoben und umfasst in einem bevorzugten Ausführungsbeispiel mit einem u-förmigen Eingriff den Steg und einen Zwischenboden des Türflügels. Vorzugsweise grenzt an diesen u-förmigen Eingriff ein federndes Hakenelement an, um die Klammer innerhalb einer Ausnehmung des Türflügels zu fixieren.

Diese Ausnehmung im Türflügel ist je nach Ausführungsform der Klammer und der Tür unterschiedlich geformt. Vorzugsweise ist die Ausnehmung ein stirnseitiges Fenster oder ein stirnseitig offener Hohlraum und der Zwischenboden ist ein unterer Boden oder er ist durch zwei voneinander beabstandete seitliche untere Stege dieses Fensters gebildet. Im letztgenannten Fall ist der Zwischenboden somit in Querrichtung der Dichtungsanordnung nicht durchgehend ausgebildet.

Die erfindungsgemässe Klammer weist vorzugsweise einen Grundschenkel und einen dazu beabstandet und annähernd parallel dazu verlaufenden Parallelschenkel auf, welche zusammen den u-förmigen Eingriff bilden. Vorzugsweise greift der Grundschenkel in die Gehäuseschiene ein und der Parallelschenkel ist zur Auflage auf den Zwischenboden des Türflügels ausgebildet. Der Abstand zwischen Grundschenkel und Parallelschenkel ermöglicht vorzugsweise die gemeinsame Aufnahme des oberen Stegs und des Zwischenbodens. Der Grundschenkel weist vorzugsweise ein freies Ende auf und am Parallelschenkel ist vorzugsweise ein Fixierungselement zur Fixierung der Klammer im oder am Türflügel angeordnet.

Vorzugsweise weist die Klammer ein Hakenelement auf zur Fixierung der Klammer relativ zum Türflügel. Dieses Hakenelement ist vorzugsweise zum Anstehen in eine stirnseitige innere Wandung des Fensters ausgebildet. Vorzugsweise ist das Hakenelement am u-förmigen Eingriff angeformt, wobei es in einem bevorzugten Ausführungsbeispiel über einen schräg verlaufenden Schenkel mit dem Parallelschenkel verbunden ist.

In einer bevorzugten Ausführungsform sind die zwei annähernd parallel zueinander verlaufenden Schenkel über einen ersten Bogen miteinander verbunden, wobei der erste Bogen in Längsrichtung dem Hakenelement vorsteht oder mit diesem fluchtet. Die Längsrichtung ist durch die zwei annähernd parallel zueinander verlaufenden Schenkel bzw. durch die Längsausdehnung der Gehäuseschiene definiert.

Der Schrägschenkel bildet vorzugsweise mit dem Parallelschenkel einen Winkel, wobei sich das Hakenelement oberhalb des ersten Bogens befindet. Der Schrägschenkel lässt sich in Richtung Parallelschenkel drücken, um die Klammer zu montieren, beispielsweise um die Klammer durch das Fenster des Türflügels zu schieben.

Die erfindungsgemässe Klammer weist in anderen Ausführungsbeispielen andere Formen auf. Ist das Fenster an der Unterseite des Türflügels angeordnet, so weist die Klammer vorzugsweise mindestens einen horizontal verlaufenden Grundschenkel, einen nach oben gerichteten Vertikalschenkel sowie ein daran angeformtes Hakenelement auf, beispielsweise in Form eines schräg nach unten verlaufenden freien Schenkel.

Das Hakenelement ist vorzugsweise in allen Ausführungsformen zu einem daran angeformten Schenkel, beispielsweise des Vertikalschenkels oder des Schrägschenkels, hin drückbar, um so die Klammer zusammenzupressen und durch das Fenster in den dahinter liegenden Hohlraum zu schieben.

Der erfindungsgemässe Türflügel zur Aufnahme dieser Türdichtung weist an einer Stirnseite oder an einer Unterseite ein Fenster zur Aufnahme des klemmenden Elements auf. Vorzugsweise weist der Türflügel eine Nut auf, welche entlang einer unteren Stirnseite des Türflügels verläuft und welche nach unten offen ausgebildet ist. Oberhalb der Nut ist auf mindestens einer seitlichen Stirnseite des Türflügels ein Fenster im Türflügel angeordnet. Das Fenster führt vorzugsweise zu einem Hohlraum, welcher einen unteren Zwischenboden aufweist. Alternativ ist das Fenster auf der Unterseite des Türflügels, beispielsweise im Nutgrund angeordnet.

Der Boden muss in beiden Ausführungsformen nicht vollständig zur Nut hin geschlossen sein. Er kann auch durch zwei seitliche in Längsrichtung der Nut verlaufende obere Stege gebildet sein, welche vom u-förmigen Eingriff der Klammer gemeinsam mit dem oberen Steg der Gehäuseschiene umfasst werden können.

Das Fenster ist vorzugsweise beabstandet zur Nut oberhalb der Nut angeordnet. Andere Positionen oder eine fluchtende Angrenzung an die Nut sind je nach Ausführungsform ebenfalls möglich.

Der Türflügel ist je nach Ausführungsform aus Metall, Kunststoff, Glas, Holz oder Kombinationen davon ausgeführt.

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Figur 1: eine perspektivische Darstellung eines unteren Teils eines Türflügels mit einer erfindungsgemässen Türdichtung gemäss einer ersten Ausführungsform;
- Figur 2: eine stirnseitige Ansicht eines unteren Teils eines Türflügels mit erfindungsgemäss montierter Türdichtung;
- Figur 3: einen Längsschnitt durch den Türflügel gemäss Figur 1 vor der Montage einer erfindungsgemässen Klammer;
- Figur 4: einen Längsschnitt durch den Türflügel gemäss Figur 1 während der Montage der erfindungsgemässen Klammer;
- Figur 5: einen Längsschnitt durch den Türflügel gemäss Figur 1 mit montierter erfindungsgemässer Klammer;
- Figur 6: einen Längsschnitt durch eine Variante des Türflügels gemäss Figur 1 mit montierter erfindungsgemässer Klammer;
- Figur 7: eine perspektivische Darstellung der erfindungsgemässen Klammer;
- Figur 8: eine Seitenansicht der Klammer gemäss Figur 7;
- Figur 9: einen Längsschnitt durch einen Türflügel mit einer erfindungsgemässen Türdichtung mit montierter Klammer gemäss einer zweiten Ausführungsform;
- Figur 10: eine perspektivische Darstellung der Klammer gemäss Figur 9;
- Figur 11: eine Seitenansicht der Klammer gemäss Figur 9;
- Figur 12: eine perspektivische Darstellung einer Unterseite eines Türflügels mit einer erfindungsgemässen Klammer gemäss einer dritten Ausführungsform und
- Figur 13: einen Längsschnitt durch den Türflügel mit montierter erfindungsgemässer Türdichtung gemäss der dritten Ausführungsform.

### BESCHREIBUNG BEVORZUGTER AUSFÜHRUNGSFORMEN

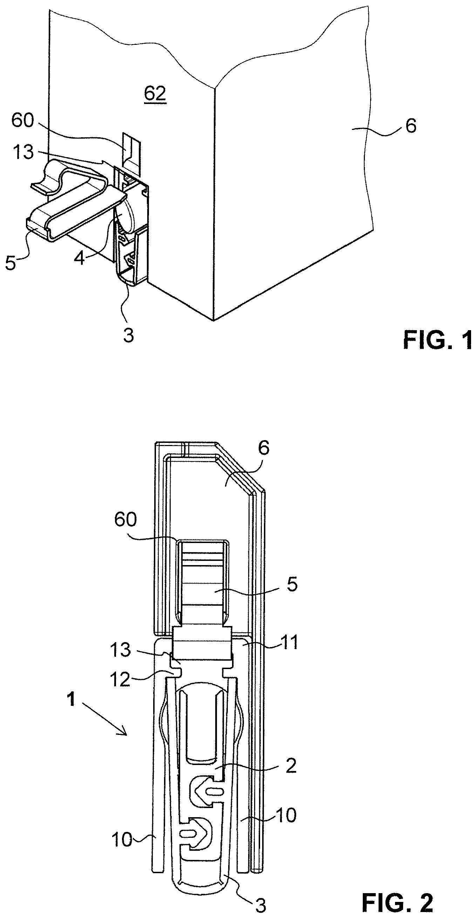

In Figur 1 ist ein Türflügel 6 mit einer erfindungsgemässen Türdichtung dargestellt. Sie weist eine Gehäuseschiene 1 auf, welche üblicherweise im Wesentlichen u-förmig und nach unten offen ausgebildet ist und zwei seitliche, annähernd parallel zueinander verlaufende Schenkel 10 sowie einen diese zwei Schenkel 10 miteinander verbindenden oberen Steg 11 aufweist. Unterhalb des oberen Stegs 11 verlaufen vorzugsweise über die gesamte Länge zwei seitliche Rippen 12, welche waagrecht in den Innenraum der Gehäuseschiene 1 ragen. Sie bilden zusammen mit dem oberen Steg einen Kanal 13, in welcher ein hier nicht dargestellter Schieber eines Absenkmechanismus verläuft. Die Gehäuseschiene 1 ist vorzugsweise als Profilschiene aus einem Metall, beispielsweise aus Aluminium, gebildet.

In der Gehäuseschiene 1 ist eine Dichtleiste gehalten. Die Dichtleiste weist eine Trägerschiene 2 und ein an dieser Trägerschiene 2 angeordnetes Dichtungsprofil 3 auf. Die Trägerschiene 2 ist ebenfalls eine Profilschiene, vorzugsweise aus Metall, insbesondere aus Aluminium. Das Dichtungsprofil 3 ist ein- oder mehrstückig ausgebildet und aus einem elastomeren Material, vorzugsweise aus Silikon oder Kautschuk, gefertigt.

Die Trägerschiene 2 ist mit dem nicht dargestellten Absenkmechanismus verbunden und wird beim Schliessen des Türflügels 6 automatisch gemeinsam mit dem Dichtungsprofil 3 abgesenkt, bis das Dichtungsprofil 3 dichtend auf einem Gebäudeboden aufliegt. Beim Öffnen des Türflügels 6 wird sie wieder automatisch gemeinsam mit dem Dichtungsprofil 3 angehoben. Die Dichtleiste lässt sich somit automatisch relativ zur bezüglich des Türflügels 6 ortsfesten Gehäuseschiene 1 verschieben.

Die hierzu verwendeten Absenkmechanismen sind hinlänglich bekannt und werden deshalb nicht beschrieben. Üblicherweise weisen sie Federn, insbesondere Blattfedern auf, um die Trägerschiene 2 mit der Gehäuseschiene 1 zu verbinden und um die Rückstellkraft beim Anheben der Dichtleiste zu gewährleisten.

Der Absenkmechanismus lässt sich elektromotorisch, magnetisch oder mechanisch auslösen. In diesem Beispiel ist die bevorzugte einseitige mechanische Auslösung mittels eines Betätigungsknopfes 4 dargestellt, welcher einseitig einer seitlichen Stirnfläche 62 des Türflügels 6 vorsteht und beim Schliessen des Türflügels 6 eingedrückt wird, den Schieber und somit den Absenkmechanismus betätigt. Der Betätigungsknopf 4 ist in den Figuren 1 sowie 3 bis 5 erkennbar. Diese Figuren zeigen die Dichtung jeweils im angehobenen Zustand.

Zur Befestigung der Gehäuseschiene 1 in einer Nut des Türflügels 6 ist nun auf mindestens einer, vorzugsweise auf beiden Stirnseiten der Gehäuseschiene 1 ein erfindungsgemässes Befestigungselement vorhanden. Ist nur auf einer Seite ein derartiges Befestigungselement vorhanden, so wird die Gehäuseschiene 1 auf der anderen Seite mit anderen bekannten Mitteln befestigt oder die Türnut ist so ausgebildet, dass sie eine Auflagefläche für die Gehäuseschiene 1 bildet.

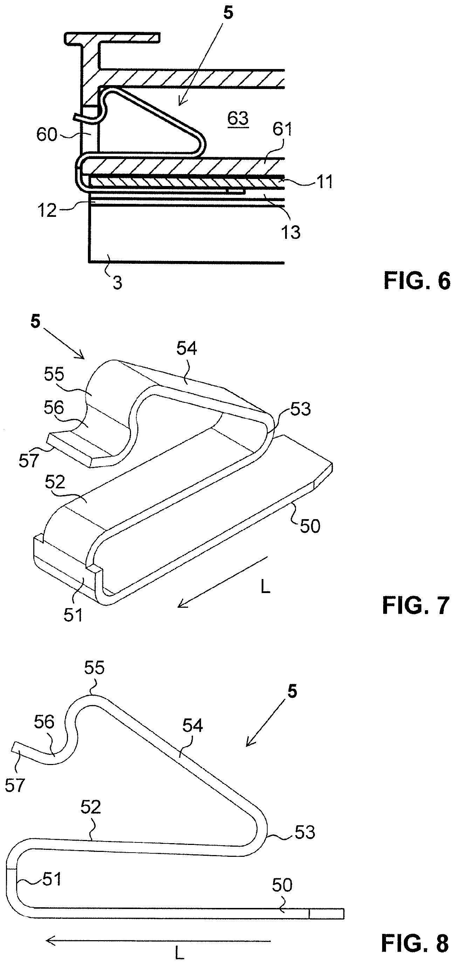

Das Befestigungselement ist als federnde Klammer 5 ausgebildet. Sie weist, wie in den Figuren 7 und 8 gut erkennbar ist, einen planen Grundschenkel 50 auf, welcher über einen ersten Bogen 51 in einen zum Grundschenkel 50 annähernd parallel verlaufenden, beabstandet angeordneten planen Parallelschenkel 51 übergeht. Die zwei Schenkel 50, 52 bilden einen gemeinsamen u-förmigen Eingriff und definieren eine Längsrichtung L.

Ein zweiter Bogen 53 schliesst sich am zweiten Ende des Parallelschenkels 51 an und führt zu einem Schrägschenkel 54, welcher einen spitzen Winkel mit dem Parallelschenkel 52 bildet, nach oben vom Grundschenkel 50 weg gerichtet ist und mit seinem zweiten Ende in Richtung des ersten Bogens 51 zeigt. An diesem zweite Ende führt ein dritter Bogen 55 zu einem Hakenelement 56, welches ein freies nach oben gerichtetes Ende 57 aufweist. Das freie Ende 57 ist vorzugsweise zurückversetzt zur äusseren Oberfläche des ersten Bogens 51 oder es fluchtet mit diesem. Vorzugsweise steht das freie Ende 57 des Hakenelements 56 auf dieser Seite den restlichen Bereichen der Klammer 5 nicht vor.

Wie in Figur 7 erkennbar ist, sind der Grundschenkel 50 und ein Teil des ersten Bogens 51 vorzugsweise breiter ausgebildet als die übrigen Bereiche, wobei das freie Ende des Grundschenkels 50 verjüngt ist. Die übrigen Bereiche der Klammer 5 weisen vorzugsweise eine gleichbleibende Breite und/oder vorzugsweise eine gleichbleibende Dicke auf. Sie sind jeweils plan ausgebildet. Vorzugsweise ist die gesamte Klammer 5 vollflächig ausgebildet. Alternativformen, insbesondere mit Ausnehmungen, Breiten und Dickenänderungen sind jedoch auch möglich.

Die Klammer 5 ist vorzugsweise aus Metall, insbesondere Federstahl, oder aus einem Kunststoff gefertigt.

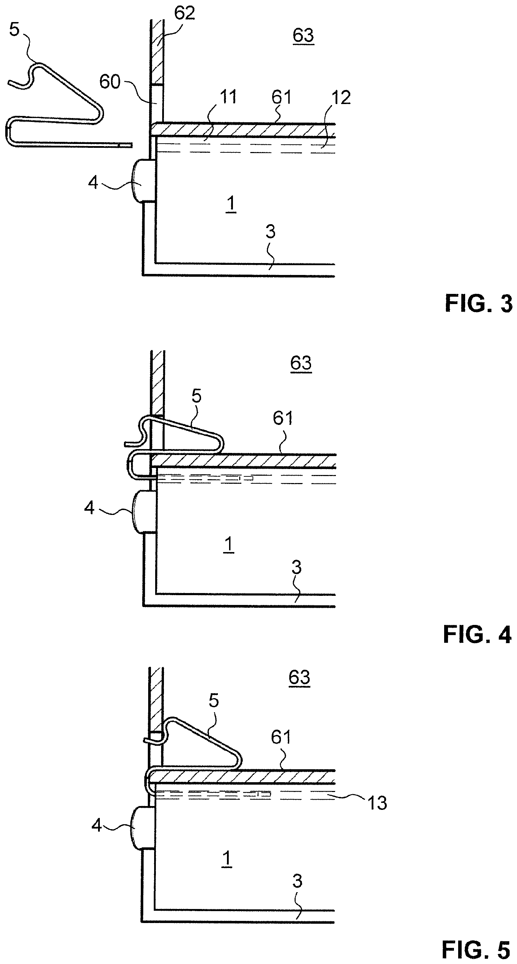

Wie in Figur 1 gut erkennbar ist, weist der Türflügel 6 oberhalb seiner Nut ein Fenster 60 auf. Dieses führt in einen Hohlraum 63 des Türflügels 6, welcher unten durch einen Zwischenboden 61 begrenzt ist. Der Zwischenboden 61 ist in diesem Ausführungsbeispiel durch den Nutgrund im Türflügel gebildet, wie in den Figuren 3 bis 6 erkennbar ist. Andere Anordnungen sind möglich.

Bei der Montage wird zuerst die Gehäuseschiene 1 mit der Dichtleiste in die Nut des Türflügels 6 eingeschoben. Dies ist in Figur 3 dargestellt. Anschliessend wird die Klammer 5 mit ihrem Grundschenkel 50 unterhalb des oberen Stegs 11, genauer in den Kanal 13, der Gehäuseschiene 1 eingeschoben. Dazu wird die Klammer 5 leicht zusammengedrückt, damit der obere Teil der Klammer 5 durch das stirnseitige Fenster 60 des Türflügels 6 eingeschoben werden kann. Der Parallelschenkel 52 kommt auf dem Zwischenboden 61 im Hohlraum 63 zu liegen, so dass der u-förmige Eingriff der Klammer 5 nun den oberen Steg 11 der Gehäuseschiene 1 und den Zwischenboden 61 des Türflügels 6 gemeinsam umfasst. Diese Position ist in Figur 4 dargestellt.

Die Klammer 5 wird nun noch weiter durch das Fenster 60 gedrückt, bis der erste Bogen 51 an der Stirnseite der Gehäuseschiene 1 und/oder an der Stirnseite des Fensters 60 ansteht und somit die Klammer 5 nicht mehr weiter hineingeschoben werden kann. In dieser Position hat sich das Hakenelement 56 im oberen Bereich des Fensters 60 verhakt, d.h. es steht auf dessen Rückseite an, und die vorher zusammengedrückte Klammer 5 hat sich wieder teilweise oder ganz entspannt. Dies ist in Figur 5 erkennbar. Das Fenster 61 ist vorzugsweise in der Höhe kleiner als die entspannte Feder, jedoch grösser als die zusammengedrückte Feder, damit diese das Fenster 61 in den Hohlraum 63 eingeschoben werden kann.

Wie in Figur 8 erkennbar ist, bildet das Hakenelement 56 mit dem Bogen 55 eine S-Form, deren mittlerer Bogen einen negativen Winkel bildet. Bei einer Krafteinwirkung von links auf die Dichtung, z.B. durch den Betätigungsknopf 4, bewirkt diese Geometrie ein verstärktes Verhaken der Klammer 4 im Fenster. Dadurch wird verhindert, dass die Klammer 4 und somit die Gehäuseschiene 1 beim Schliessen der Tür verschoben wird.

In Figur 6 ist dieselbe Situation wie in Figur 5 in einer Variante eines Türflügels 6 dargestellt. In diesem Beispiel steht das freie Ende 57 des Hakenelements 56 dem ersten Bogen 51 vor und bildet somit auf dieser Seite am weitesten vorstehende Teil der Klammer 5.

Wie in den Figuren 5 und 6 gut erkennbar ist, steht die Klammer 5 stirnseitig dem Türflügel 6 kaum vor. Figur 2 zeigt eine Ansicht der Türdichtung im montierten Zustand mit vollständig eingeschobener Klammer 5. Hier ist erkennbar, dass die Klammer 5 sehr schmal ausgebildet ist und somit nicht die Wahl der Breite des Türflügels beeinflusst.

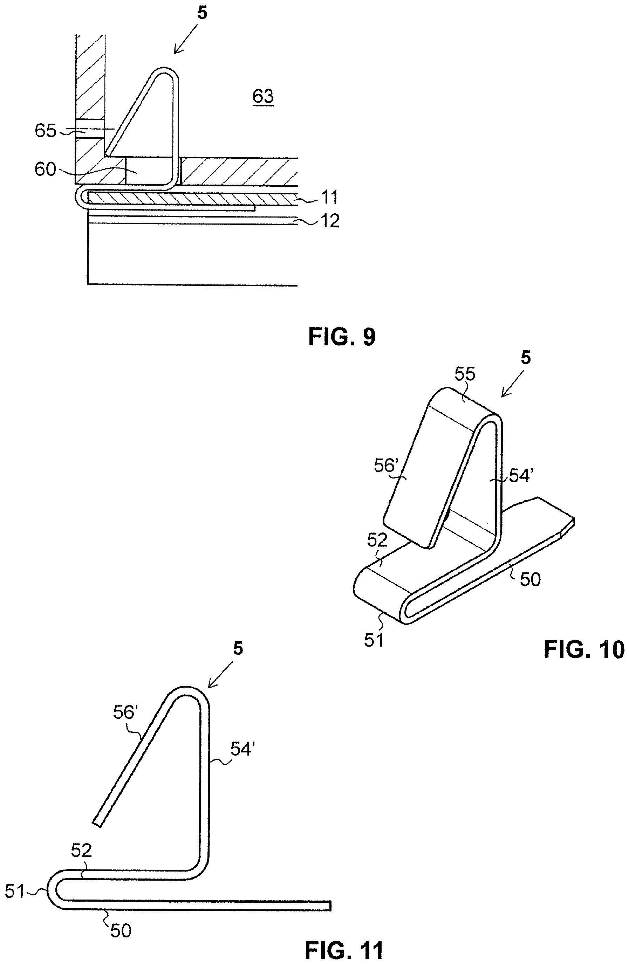

In den Figuren 9 bis 11 ist eine zweite erfindungsgemässe Ausführungsform dargestellt. Die Klammer 5 weist wiederum einen Grundschenkel 50, einen ersten Bogen 51 sowie einen Parallelschenkel 52 auf. Der Parallelschenkel 52 ist jedoch relativ kurz im Vergleich zum Grundschenkel 50 ausgebildet. Er geht in einen nach oben gerichteten Vertikalschenkel 54' über, welcher vorzugsweise genau oder mindestens annähernd einen rechten Winkel mit dem Parallelschenkel 52 bildet. Am Vertikalschenkel 54' ist ein schräg nach unten zum ersten Bogen 51 hin geneigter freier Schenkel 56' angeordnet, welcher ein Hakenelement bildet.

Der zugehörige Türflügel 6 weist wiederum das Fenster 60 zum Einführen der Klammer 4 ein. In diesem Fall ist das Fenster 60 jedoch auf der unteren Seite des Türflügels 6 angeordnet, wobei es wieder in einen Hohlraum 63 oberhalb der Türdichtung führt. Die untere Stirnseite kann die unterste Oberfläche des Türflügels 6 sein oder, wie in diesem Beispiel dargestellt, in einem Nutgrund 64 einer Aufnahmenut zur Aufnahme der Gehäuseschiene 1 angeordnet sein.

Stirnseitig ist ein kleineres Zugangsfenster 65, vorzugsweise lediglich ein kleines Durchgangsloch, vorhanden, in welches ein Stift eingeschoben werden kann, um die Klammer 5 zu lösen und somit die Gehäuseschiene 1 wieder zu entfernen.

Auch diese Klammer ermöglicht ein werkzeugfreies Montieren der Dichtungsvorrichtung am oder im Türflügel 6.

Im ersten Ausführungsbeispiel lässt sich die Dichtungsvorrichtung auch bei bereits montiertem Türflügel 6 montieren bzw. wieder entfernen, da sich die Gehäuseschiene 1 sowie die Klammern 5 stirnseitig in den Türflügel 6 einschieben lassen.

Im zweiten Ausführungsbeispiel werden die Klammern 5 stirnseitig auf die Gehäuseschiene 1 geschoben, jedoch wird die Gehäuseschiene 1 anschliessend von unten in die Nut oder an die untere Seite des Türflügels 6 angedrückt und die Klammern 5 werden durch die nach unten gerichteten Fenster 60 des Türflügels 6 geschoben und in den dahinter liegenden Hohlräumen 63 geklemmt. Diese zweite Ausführungsform hat den Vorteil, dass der Benützer nur eine sehr kleine, kaum sichtbare Öffnung sieht und das grössere Fenster 60 durch die Dichtung verdeckt ist.

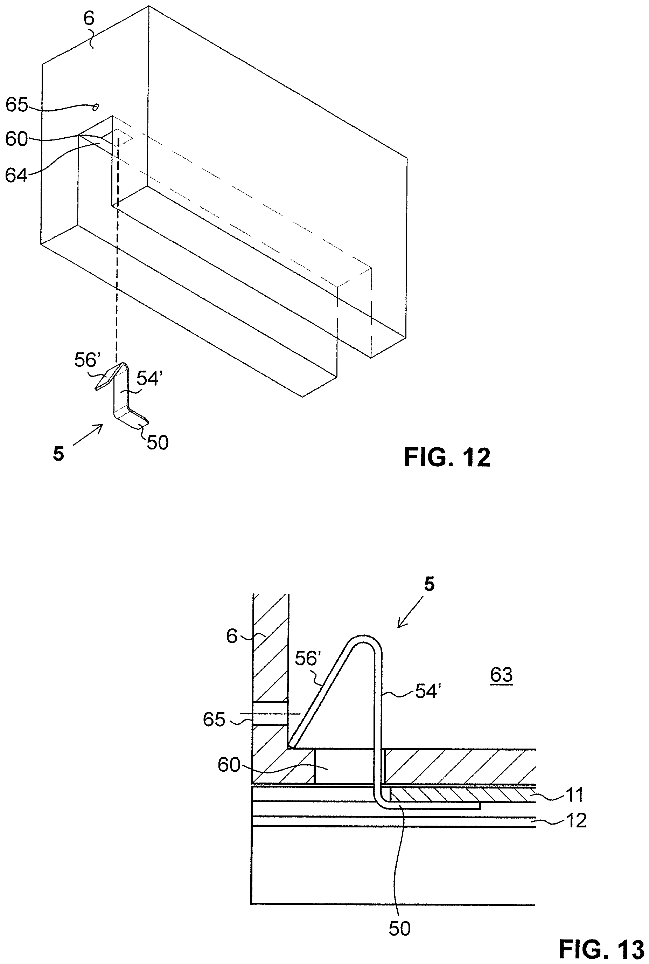

In den Figuren 12 und 13 ist eine dritte erfindungsgemässe Ausführungsform dargestellt. Auch hier ist das Fenster 60 auf der Unterseite des Türflügels angeordnet. Es ist wiederum ein kleines Zugangsfenster 65 auf der Stirnseite vorhanden. Die Klammer 5 ist in diesem Beispiel in einer oberen Öffnung 14 der Gehäuseschiene 1 eingeführt. Die Öffnung 14 ist je nach Ausführungsform eine nach oben offenen Nut, beispielsweise eine C-Nut, oder sie ist lediglich ein Fenster, welches an einem oder an beiden Enden in einem obersten Steg 11 der Gehäuseschiene 1 angeordnet ist.

Die Klammer 5 kann wiederum unterschiedliche Formen aufweisen. Vorzugsweise weist sie einen 50, einen daran angeformten Vertikalschenkel 54' sowie einen an diesem angeformten, schräg nach unten gerichteten freien Schenkel 56' auf. Der freie Schenkel 56' bildet wiederum das Hakenelement. Die Klammer 5 ist wiederum mittels des freies Schenkels 56' im Fenster 60 gehalten. Er lässt sich wie im zweiten Ausführungsbeispiel gegen den Vertikalschenkel 54' pressen, um die Kammer 5 durch das Fenster 60 zu schieben. Er lässt sich zudem, ebenfalls wie im zweiten Ausführungsbeispiel, durch einen Stift, welcher durch das Zugangsfenster 65 in den Hohlraum 63 geschoben wird, in Richtung Vertikalschenkel 54' drücken, um die Klammer 5 wieder durch das Fenster 60 zu entfernen. Diese Ausführungsform weist den Vorteil auf, dass auch die Klammer 5 bei montierter Gehäuseschiene 1 nicht mehr von aussen sichtbar ist.

Die Türdichtung mit dem erfindungsgemässen Befestigungselement ist zur Verwendung in Kunststofftüren und Metalltüren geeignet. Sie lässt sich zudem sehr schmal ausbilden.

**BEZUGSZEICHENLISTE**

| | | | |
|---|---|---|---|
| 1 | Gehäuseschiene | 53 | zweiter Bogen |
| 10 | Schenkel | 54 | Schrägschenkel |
| 11 | Steg | 54' | Vertikalschenkel |
| 12 | Rippe | 55 | dritter Bogen |
| 13 | Kanal | 56 | Hakenelement |
| 14 | obere Öffnung | 56' | freier Schenkel |
| | | 57 | freies Ende |
| 2 | Trägerschiene | | |
| | | 6 | Türflügel |
| 3 | Dichtungsprofil | 60 61 | Fenster Zwischenboden |
| 4 | Betätigungsknopf | 62 | Stirnfläche |
| | | 63 | Hohlraum |
| 5 | Befestigungselement | 64 | Nutgrund |
| 50 | Grundschenkel | 65 | Zugangsfenster |
| 51 | erster Bogen | | |
| 52 | Parallelschenkel | L | Längsrichtung |

## Patentansprüche

1. Türdichtung mit einer Gehäuseschiene (1), einer in der Gehäuseschiene (1) gehaltenen Dichtleiste (2, 3) und einem Befestigungselement zur stirnseitigen Befestigung der Gehäuseschiene (1) in einer Nut eines Türflügels (6), **dadurch gekennzeichnet, dass** das Befestigungselement ein klemmendes Element (5) ist, welches zur stirnseitigen oder unterseitigen Befestigung der Gehäuseschiene (1) ausgebildet ist.

2. Türdichtung nach Anspruch 1, wobei das klemmende Element (5) federnd ausgebildet ist.

3. Türdichtung nach einem der Ansprüche 1 oder 2, wobei das klemmende Element (5) stirnseitig in die Gehäuseschiene (1) eingreift.

4. Türdichtung nach einem der Ansprüche 1 bis 3, wobei das klemmende Element (5) zur klemmenden Aufnahme in einem stirnseitigen Fenster (60) des Türflügels ausgebildet ist.

5. Türdichtung nach einem der Ansprüche 1 bis 4, wobei das federnde Element (5) einstückig ausgebildet ist.

6. Türdichtung nach einem der Ansprüche 1 bis 5, wobei das klemmende Element (5) einen Grundschenkel (50) und einen dazu beabstandet und annähernd parallel verlaufenden Parallelschenkel (52) aufweist, wobei der Grundschenkel (50) in die Gehäuseschiene (1) eingreift und der Parallelschenkel (52) zur Auflage auf einem Zwischenboden (61) des Türflügels (6) ausgebildet ist.

7. Türdichtung nach Anspruch 6, wobei die Gehäuseschiene (1) zwei seitliche Schenkel (10) und einen oberen Steg (11) aufweist, welcher die zwei seitlichen Schenkel (10) miteinander verbindet und wobei der Abstand zwischen Grundschenkel (50) und Parallelschenkel (52) die gemeinsame Aufnahme des oberen Stegs (11) und des Zwischenbodens (61) ermöglicht.

8. Türdichtung nach einem der Ansprüche 1 bis 7, wobei das klemmende Element (5) ein Hakenelement (56) aufweist zur Fixierung des klemmenden Elements (5) relativ zum Türflügel (6).

9. Türdichtung nach den Ansprüchen 4 und 8, wobei das Hakenelement (56) zum Anstehen in eine stirnseitige innere Wandung des Fensters (60) ausgebildet ist.

10. Türdichtung nach einem der Ansprüche 1 bis 9, wobei das klemmende Element (5) zwei annähernd parallel zueinander und beabstandet voneinander verlaufende Schenkel (50, 52) sowie ein daran über einen schräg oder vertikal verlaufenden Schenkel (54, 54') angeformtes Hakenelement (56, 56') aufweist.

11. Klemmendes Element (5) einer Türdichtung gemäss einem der Ansprüche 1 bis 10, wobei das klemmende Element (5) zwei annähernd parallel zueinander und beabstandet voneinander verlaufende Schenkel (50, 52) sowie ein daran über einen schräg oder vertikal verlaufenden Schenkel (54, 54') angeformtes Hakenelement (56, 56') aufweist.

12. Klemmendes Element (5) nach Anspruch 11, wobei ein erster der annähernd parallel zueinander verlaufenden Schenkel einen Grundschenkel (50) und ein zweiter der annähernd parallel zueinander verlaufenden Schenkel einen Parallelschenkel (52) bildet, wobei der Grundschenkel (50) länger ausgebildet ist und ein freies Ende aufweist und wobei der Schrägschenkel (54) oder der Vertikalschenkel (54') am Parallelschenkel (52) angeordnet ist.

13. Klemmendes Element (5) nach einem der Ansprüche 11 oder 12, wobei die zwei annähernd parallel zueinander verlaufenden Schenkel (50, 52) eine Längsrichtung (L) definieren, wobei die zwei annähernd parallel zueinander verlaufenden Schenkel (50, 52) über einen ersten Bogen (51) miteinander verbunden sind und wobei der erste Bogen (51) in Längsrichtung dem Hakenelement (56, 56') vorsteht oder mit diesem fluchtet.

14. Klemmendes Element (5) nach einem der Ansprüche 11 bis 13, wobei der Schrägschenkel (54) oder der Vertikalschenkel (54') mit dem Parallelschenkel (52) einen Winkel bildet und das Hakenelement (56) sich oberhalb des ersten Bogens (51) befindet.

15. Türflügel (6) zur Aufnahme einer Türdichtung gemäss einem der Ansprüche 1 bis 10, wobei der Türflügel (6) an einer Stirnseite oder an einer Unterseite ein Fenster (60) zur Aufnahme des klemmenden Elements (5) aufweist.
